# EUROPEAN PATENT APPLICATION

(11) **EP 4 300 880 A1**
(43) Date of publication of application: **03.01.2024**
(21) Application number: 22181996.4
(22) Date of filing: 29.06.2022
(51) Int. Cl.: H04L 9/40, G06F 21/62, G05B 19/418

(54) **METHOD AND SYSTEM FOR CONTROLLING ACCESS TO DATA IN AN INDUSTRIAL PLANT OR IN A DATABASE ASSOCIATED TO THE INDUSTRIAL PLANT**

(71) Applicant: BASF SE, 67056 Ludwigshafen am Rhein (DE)
(72) Inventor: PACK, Robert, 67056 Ludwigshafen (DE)
(74) Representative: Eisenführ Speiser

(57) **Abstract**

A method for controlling access to data in an industrial plant is provided. Elements (11 - 18) are mapped to elements of a graph structure. Scopes (S10 - S30) are defined, which are associated to elements (11 - 18) in the graph structure. An authorization provider (31 - 33) is associated a scope (S10 - S30) provides an authorization of data from scopes (S10 - S30). Identifiers for entities the elements in the graph structure are parsed. Each scope is associated to one of the elements or entities in the graph structure. A request from an entity for data is received. It is determined to which scope (S10 - S30) the entity is related to. Authorization to the request is provided by the at least one authorization provider (31 - 33) associated to the scope (S10 - S20). The requesting entity is granted access to the requested data of the target entity based on the authorized request.

## Description

### FIELD OF THE INVENTION

The present invention relates to a method and system of controlling access to data in at least one industrial plant or in a database associated to the at least one industrial plant.

### BACKGROUND OF THE INVENTION

Modern industrial plants are highly complex operations with a huge number of processing elements and a great number of sensors and actuators. Process data in such an industrial plant is monitored such that a large amount of process data is collected. This data is for example used for high-level control, for a plant wide control and safety supervision systems, scheduling of maintenance and fault detection.

### SUMMARY OF THE INVENTION

It is an object of the invention to be able to access the data gathered in an industrial plant, wherein the data can be stored in the plant or in a database.

This object is achieved by a method of controlling access to data of an industrial plant in a database or in the industrial plant according to claim 1 and system of controlling access to data of an industrial plant in a database or in the industrial plant according to claim 8.

In an aspect of the invention, a method for controlling access to data in at least one industrial plant or in a database associated to the at least one industrial plant is provided. Elements of the industrial plant are mapped to elements of a graph structure based on a graph theory representing the industrial plant. The graph structure has several levels. Scopes are defined, which are associated to elements in the levels of the graph structure and/or which are associated to target entities in the graph structure or to target entities associated to elements in the graph structure. At least one authorization provider is associated to one of the scopes and is configured to provide an authorization for data from one of the scopes. Identifiers for target entities in or associated to the elements in the graph structure are parsed. Each scope comprises at least one signal provider configured to provide a signal. Each scope being associated to one of the elements or target entities in the graph structure. A request from a requesting entity for data of at least one target entity in or associated to the at least one industrial plant is received via an application programming interface. The target entity to which scope is related to, is determined. The request for data from the target entity is authorized by the at least one authorization provider associated to the scope to which the target entity is related to. The requesting entity is granted access to the requested data from the target entity based on the authorized request.

According to an embodiment, at least one role defining access rights to the data in the industrial plant or the data base is associated to a requesting entity. The authorization for the requested data is performed based on the role associated to the requesting entity.

According to an embodiment, the requesting entity is a user, a service, a micro-service and/or a data processing pipeline.

According to an embodiment, the target entity is a user, an internal or external service, an internal or external micro-service, a data processing pipeline.

According to an embodiment, the data of the target entity comprises data relating to a production asset in the industrial plant, processing data, telemetry data, meta data, laboratory data, and/or production data.

In an aspect of the invention, a system for controlling access to data in at least one industrial plant or in a database associated to the at least one industrial plant is provided. Elements of the industrial plant are mapped to elements of a graph structure based on a graph theory representing the industrial plant. The graph structure has several levels. Scopes associated to elements in the levels of the graph structure and/or associated to entities in the graph structure or associated to elements in the graph structure are defined. Identifiers for entities in or associated to the elements in the graph structure are parsed, wherein each scope comprises at least one signal provider configured to provide a signal. Each scope being associated to one of the elements or entities in the graph structure. The system comprises at least one authorization provider being associated to one of the scopes and being configured to provide an authorization to data from scopes. An application programming interface is configured to receive a request from a requesting entity for data of at least one target entity in the or associated to a target entity in the at least one industrial plant via an application programming interface. The scope to which the target entity is related to is determined. The at least one authorization provider is configured to provide authorization to the request for data of the target entity.

According to a further embodiment of the invention, the data comprises data relating to a production asset in the industrial plant, processing data, telemetry data, meta data, laboratory data and/or production data.

The data of the industrial plant can be generated by signal providers (e.g. sensor data, lab measurements) or by a production asset. Each target entity within the graph can be identified differently in different data storages in the industrial plant or the database as its data may be used for different purposes (e.g. control a motor, determine an energy consumption, predictive maintenance etc). Hence, each target entity in the graph structure may have references to various unique identifiers pointing to data stored in backend systems. These identifiers can be parsed when the graph structure is generated. Hence, the identifiers can be determined beforehand. In addition or alternatively, the identifiers can also change during the operation of the industrial plant.

According to an embodiment, an identifiable target entity in the graph structure may be a plant, a cost center, a business unit, a process group, a unit operation, a signals provider etc.

According to an embodiment, a scope can be related to a target entity. The scope can define the data or the data source that is related to the target entity. The data can relate to data stored in a database, life data from an industrial plant or derived data (e.g. a computation or model that produces results based on some concrete or derived inputs).

According to an embodiment, a scope can be associated to at least one signal provider, which is providing at least one signal. A signal can relate to measurements or information generated by an entity in the graph structure. This can be measurements e.g. by sensors, within a production process or accounting information. The signal provider can also be a system or process generating a signal. This can be a database or a deployed model or calculation. Each signal must have a unique identifier such that it can be identified and thus be extracted within a data source. A signal can thus be a distinguishable piece of information or data within a data source.

To enable an authorization of a requesting entity each signal in the graph structure is assigned to a scope within the graph.

According to an embodiment, data or information in or from the industrial plant can be structured into signals. Each signal can denote a column within a wide table, or a filter on a narrow table. In case of the wide table, individual signals may be further distinguished via fields denoting a specific scope in the table.

According to an embodiment, meta data in or from the industrial plant can be defined within the graph or can be retrieved from external sources via keys which can be defined within the graph.

According to an embodiment, the requesting entity is a user, a service, a micro-service and/or a data processing pipeline.

According to an embodiment, the target entity is a user, an internal or external service, an internal or external micro-service, a data processing pipeline.

According to an embodiment, the data of the target entity comprises data relating to a production asset in the industrial plant, processing data, telemetry data, meta data, laboratory data, and/or production data.

To enable an authorization of a requesting entity each signal in the graph structure is assigned to a scope within the graph.

According to an embodiment, data or information in or from the industrial plant can be structured into signals. Each signal can denote a column within a wide table, or a filter on a narrow table. In case of the wide table, individual signals may be further distinguished via fields denoting a specific scope in the table.

According to an embodiment, meta data in or from the industrial plant can be defined within the graph or can be retrieved from external sources via keys which can be defined within the graph.

It shall be understood that the aspects described above and specifically the method of claim 1, the system of claim 7, and the computer program of claim 8 have similar and/or identical preferred embodiments in particular as defined in the dependent claims.

It shall be understood that preferred aspects of the present invention can also be any combination of the dependent claims or above embodiments with a respective independent claim.

These and other aspects of the present invention will be apparent from and elucidated with reference to the embodiments described hereafter.

### BRIEF DESCRIPTION OF THE DRAWINGS

- Fig. 1: shows a schematic representation of a graph structure,
- Fig. 2: shows a schematic representation of a graph structure for a structure of a company,
- Fig. 3: shows a schematic representation of a processing in a plant, and
- Fig. 4: shows a further schematic representation of a graph structure of the plant of Fig. 3.

### DETAILED DESCRIPTION OF EMBODIMENTS

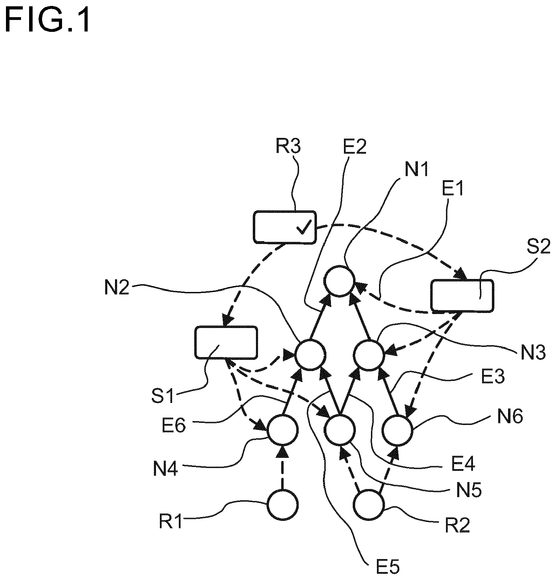

Fig. 1 shows a schematic representation of a graph structure. A graph structure is used to as a way to describe elements of an industrial plant as well as their interdependencies.

In "A graph-theory-based approach to the analysis of large-scale plants", Preisig et al., Computers and Chemical Engineering, Pergamon Press Oxford, GB, Volume 33, No. 3, 20 March 2009, page 598 - 604, the application of the graph theory on the analysis of large-scale plants is described. The industrial plant is analysed and mapped to a graph structure. A graph relates to a set of vertices (nodes) and edges (links, lines), in which an edge connects two or more nodes.

Thus, a graph structure is used to map or represent a system architecture for example of an industrial plant like a chemical plant.

The graph structure of Fig. 1 comprises a number of nodes N1 - N6 as well as a number of edges E1 - E6. The nodes N1 - N6 may represent or may be mapped to different elements in an industrial plant.

Furthermore, the processing in the industrial plant can be mapped to different scopes S1, S2. A scope S1, S2 may correspond to a signal or data processing. In other words, a scope can perform a processing based on the received data. A scope can own a signal (the signal is associated to the scope) which is provided by a signal provider. Such a signal provider can be one of the nodes N1 - N6. Accordingly, scopes S1 - S2 can be associated to one or more of the nodes N1 - N6. A signal or data provided by the nodes is processed by the scope.

As an example, scope S1 can be associated to the nodes N4, N5 and N6 representing elements in the industrial plant. The scope S2 can be associated to the nodes N1, N3 and N6 (representing e.g. other elements in the industrial plant). The nodes may comprise signal providers (like sensors) which provide the signals that the scope (e.g. process control) requires to perform the desired processing.

In other words, the scope S1 requires information or data from the nodes N4, N5, N6. Hence, it does not require data from N1 - N3 nodes.

Moreover, the concept of role is also introduced in Fig. 1. In Fig. 1, three roles R1, R2, R3 may be present, wherein the roles R1 and R2 relate to an administrator. The role R3 may also relate to an administrator. A role can be embodied by a user or service, which requires access to data owned by the scope.

If a user or service requests data, first of all it must be determined to which scope (S1, S2) the requested data is associated to and furthermore it must be determined whether the user or service has an appropriate role R1 within the scope S1, S2 such that he or it has the right to access the data.

According to the embodiment of Fig. 1, a scope S1 - S2 owns a signal from one of the nodes N1 - N6. The scope S1, S2 defines an arbitrary subgraph associated to a specific node and a set of relationships.

The identification of a user can be performed by an external system or service and is not subject of this application. The present application focusses on the authorization of a user or user ID (which has already been identified) to access data in a database in the industrial plant.

According to an embodiment of the invention, an industrial plant is described based on a graph structure. The access control to the elements of the graph structure can for example be performed based on a role based access control RBAC. By means of the RBAC, the system determines whether a user has access rights to the requested data. On the other hand, the graph structure is used to structure complex industrial plants and complex industrial processes in a more clearly and understandable way.

By using the role based access control RBAC, it is not required to associate different access rights to each user. Instead, the access rights are associated to different roles. Each user can then be associated to at least one role.

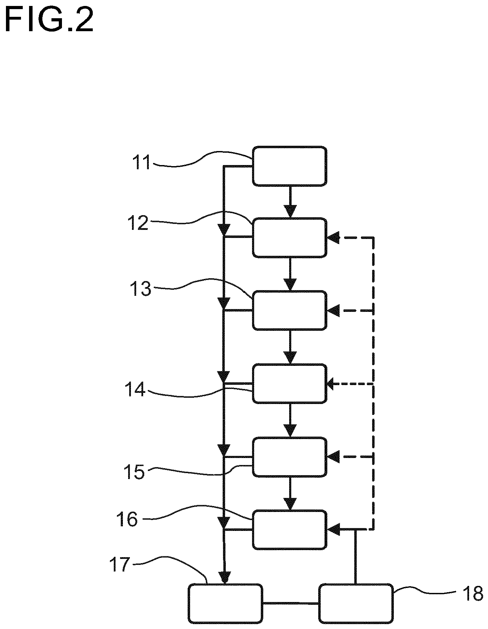

Fig. 2 shows a schematic representation of a graph structure for a structure of a company. A company 11 may have several industrial plants in a region 12. In the region 12, at least one industrial plant 13 is provided. In the industrial plant 13, at least one cluster of plants 14 is present. Each cluster of plants 14 comprises at least one plant 15. Each plant 15 comprises at least one process group 16. A transport subsystem 17 and at least one unit operation 14 can be provided. Each element in this graph is owned by the element above. For example, a site 13 can be owned by a region 12. Moreover, a process group 16 can be owned by a plant 15. A plant 15 can be owned by a cluster 14. A cluster can be owned by a site 13.

Different elements in the graph structure can be represented as scopes.

In Fig. 2, different levels of a production system are depicted. Different roles may need access to different levels within this system. For example, for maintenance, the access required may relate to individual components in the ground within a unit operation 18. On the other hand, cost accounting may only require to allocate cost to the level of a cluster 13 of several plants. Hence, this will not need access to the individual components within the plant.

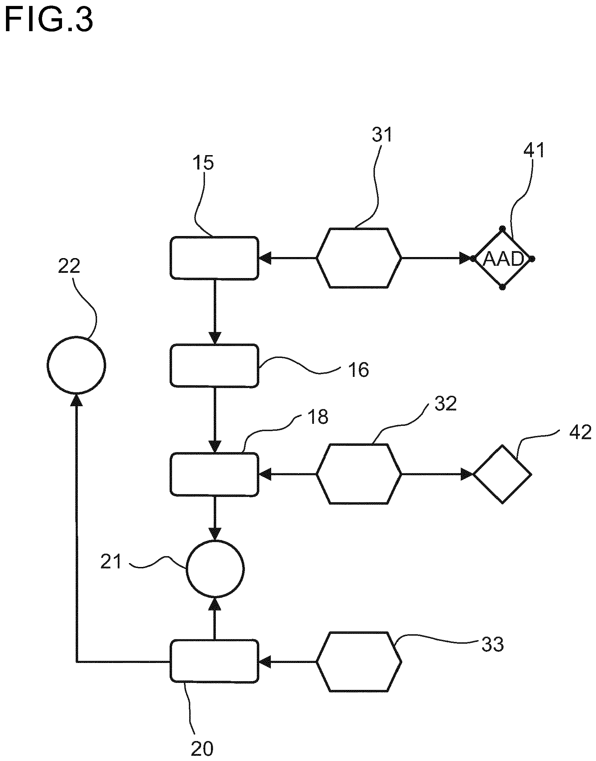

Fig. 3 shows a schematic representation of a processing in a plant. A plant 15 comprises at least one process group 16. The process group 16 comprises at least one unit operation 18. A signal provider 20 (e.g. like a sensor) provides a signal 21 (a sensor signal) which is owned by the unit operation 18. The signal provider 20 provides a signal 22 which can also be owned by the process group 16.

According to an embodiment of the invention, authorizing providers 31 - 33 can be implemented or integrated into the graph structure. In other words, an authorization provider 31 - 33 can be associated to different elements within the graph structure.

As an example in Fig. 3, different authorization providers 31 - 33 can be associated for example to the unit operation 18 and the plant 15 respectively. An authorization severity 33 can be associated to the signal provider 20. A first database 42 may be associated to the first authorization provider 31 (associated to the unit operation). A further database 42 may be associated to the first authorization 31 provider associated to the plant 15.

The authorization provider 31 is responsible for authorizing access requests to data from the plant 15. The authorization provider 32 is responsible for authorizing access to data from the unit operation 18.

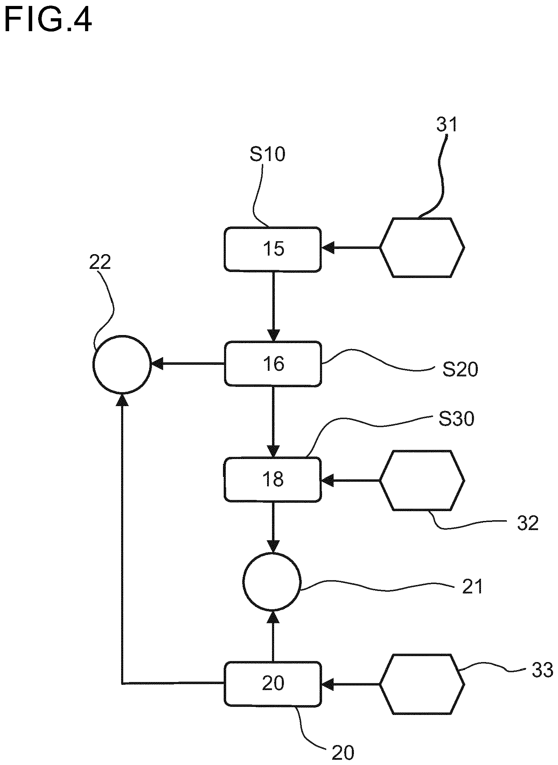

Fig. 4 shows a further schematic representation of a graph structure of the plant of Fig. 3. Here, a first scope S10 is associated to the plant 15, a second scope S20 is associated to the process group 16 and a third scope S30 is associated to the unit operation 18. The signal provider 20 provides a signal 21 which is owned by the third scope S30. The signal provider 20 can provide a second signal S22 which is owned by the second scope S20. A first authorization provider 31 can be associated to the first scope S10. A second authorization provider 32 can be associated to the third scope S30. An authorization severity 33 can be associated to the signal provider 20. It should be noted that Fig. 4 is a very schematic representation of a plant. As a plant comprises a number of unit operations and a great number of signal providers like sensors, the plant will also have a huge amount of different scopes.

A signal provider like sensors in the industrial plant provide signals which can be owned by a scope (like unit operations or the process group).

If an entity (like a user or a service) requests access to a signal from a signal provider 20, the authorization provider 31 - 33 which is in the next higher level decides whether or not a user can receive access to the requested data. This can for example be performed based on a role based access control RBAC, where each user is associated to a role.

The entity requesting access to the data can be a user via an API or via a user interface Ul. Alternatively, the entity can also be a service, an automated job, a data processing pipeline, a service or an automated job acting on behalf of a logged in user.

According to an embodiment of the invention, the data to which the entity may request access can be data, meta data, calculations, modules derived from the data, and/or applications visualizing or processing the data.

The data sources can be data sources internal of the system, external data sources directly accessible via the processing platform, external data sources not directly accessible from the platform and meta data of such systems.

According to an embodiment of the invention, the data and meta data from the equipment in an industrial or chemical plant can be structured in the graph structure. The corresponding permissions to the access of this data can be mapped to scopes and roles within the graph structure. A scope can own data and/or a signal. A role can be embodied by a user who wants access to the triple data. A role can for example be an analyst, a scientist, an operator, etc. To grant access to the requested data, the system must determine which is the scope that owns the data and determine whether the user has an appropriate role within this scope. To determine whether or not the user can have access to the data, first it must be determined which scope is associated to the requested data.

Within the graph structure according to an embodiment of the invention, a scope defines an arbitrary subgraph by choosing a specific note and a set of relationships.

A signal provider can for example by a sensor which generates a signal. A signal may describe some sort of measurement or information generated or (e.g. for accounting) an entity within the graph. The signal provider provides in an abstract form the system or process that materialize the signal like a database, a deployed module/calculation, etc. Each signal which represents a distinguished piece of information within the data source must be uniquely distinguishable within the data source. This can be structured as a wide table where individual signals usually refer to a column or as a narrow table where the signal is encoded within a column in the table. A signal provider holds information about how this can be done by referencing a field or column within the produced data set where the reference to an entity is made. Accordingly, an observation within a data source can be allocated to an identifiable entity within the graph.

Furthermore, to resolve the authorization problem, each signal is assigned to a scope within the graph structure. The measured data can be structured into signals where each signal may denote a column within a wide table or a filter on a narrow table. If a wide table is used, individual signals can be further distinguished via fields denoting a specific scope in the table.

Several entities can be found within the different trees inside the graph or are referenced in external systems. The external systems may for example be SAP systems or the like. The respective nodes in the graph that are considered identifiable entities are all entities that hold a reference to an external system via a foreign key.

According to an embodiment, the first authorization provider can grant access to scopes in the same or lower levels in the graph structure. However, it cannot provide access to scopes in higher levels. Once a scope is determined the responsible authorization provider must be determined. It is the authorization provider in the same or in a higher level in the graph structure. The authorization provider can grant access to a scope and all other scopes in lower levels. The access to scopes in the lower levels can thus be inherited by the request from the entity. In other words, the first scope can be a parent scope and the request from the entity can inherit the access to the scopes (child scopes) in the lower levels.

A second authorization provider can be associated to a scope in a level lower than the level of the first authorization provider. The second authorization provider is configured to break the authorization of the first authorization provider for scopes in the same level or levels lower than the second authorization provider. The second authorization provider can thus break or stop the inheritance of the access rights from higher-level scopes. Accordingly, highly sensitive scopes can be protected from access via higher-level scopes.

According to an embodiment, the scopes within the graph structure can be hierarchical and access rights of an entity for a scope can for example be passed down (inherited) to a child of a scope (i.e. scopes within a scope). A scope can also be a child of several higher-level scopes. As an example a (parent) scopes may relate to user which has the role of a viewer of a plant. Such a user can then also have access rights (view rights) for all elements in the plant. However, with the above break feature, the access rights for the one (child) scope in the plant can be interrupted. Thus increasing the security of the system.

According to an embodiment, once a request for data or metadata is received from an entity, it must be determined to which scope the requested data is associated to. Then it must be determined by the responsible authorization provider whether the entity has a role which allows an access to the requested date. The responsible authorization provider is an authorization provider which is associated to the same or a higher level than the level of the scope (parent scope). Any scope in a lower level (child scope or sub-scope) can also related to the same access rights. The authorization provider can be associated to a plant, an operational unit, a signal provider etc. For performing the authorization decision the scopes and signals associated to the request are determined. Than the responsible authorization provider is determined by checking the levels and above of the scope. The next authorization provider in the levels is the responsible authorization provider.

In the graph structure, a signal is owned by an entity within the graph. Every signal provider defines a minimum role requirement. If a query is to be resolved, it needs to be checked which scopes and/or signals are involved in the query. From the signals, each scope owning the signals can be determined. Such a scope can be transversed when resolving the query for data.

The authorization is performed by assigning a role of a user or service for a scope in the graph. Such a role can be a viewer, developer and/or business analyst. Based on the ownership of the signal in the scope and the role requirements of a signal provider, a minimum requirement for a user to resolve the query can be determined.

According to an embodiment of the invention, a request for data issued by an entity may relate to data or subsets of data which are associated to different scopes in the graph structure. As an example, one entity requesting this data may for example by a monitoring unit monitoring critical assets like compressors and pumps. Some of the compressors or pumps may be located within different plants, different process groups or different unit operations. Therefore, the corresponding data will be owned by different scopes within the system. Access right to such data can for example be associated to groupings or activities. Such groupings may provide a grouping outside the hierarchy as for example described in Fig. 2 or 3. Regarding the authorization of the entity to access the data, the respective scopes may be determined and post access request to all owners of the data (all scopes owning the data may be issued). In addition or alternatively, the owners of the data may be asked to allow access to the logical unity (topic, project, etc.) and as such accept all individuals assigned to these activities inherit all required access right to perform the activity. Such activities can be a form of a fine-grained authorization provider.

Entities in the graph can relate or be associated with external systems e.g. via a foreign key.

The data of the industrial plant is generated by signal providers (e.g. sensor data, lab measurements) or for a production asset. Each entity (target entity) within the graph can be identified differently in different data storages as data may be used for different purposes (e.g. control a motor, determine an energy consumption, predictive maintenance etc). Hence, each target entity in the graph structure may have references to various unique identifiers pointing to data stored in backend systems. These identifiers can be parsed when the graph structure is generated. Hence, the identifiers can be determined beforehand. In addition or alternatively, the identifiers can also change during the operation of the industrial plant.

An identifiable target entity in the graph structure may be a plant, a cost center, a business unit, a process group, a unit operation, a signals provider etc

A scope can be related to a target entity. The scope can define the data or the data source that is related to the target entity. The data can relate to data stored in a database, life data from an industrial plant or derived data (e.g. a computation or model that produces results based on some concrete or derived inputs. A scope can be associated to at least one signal provider, which is providing at least one signal. A signal can relate to measurements or information generated by an entity in the graph structure. This can be measurements e.g. by sensors, within a production process or accounting information. The signal provider can also be a system or process generating a signal. This can be a database or a deployed model or calculation. Each signal must have a unique identifier such that it can be identified and thus be extracted within a data source. A signal can thus be a distinguishable piece of information or data within a data source.

To enable an authorization of a requesting entity each signal in the graph structure is assigned to a scope within the graph.

Data or information in or from the industrial plant can be structured into signals. Each signal can denote a column within a wide table, or a filter on a narrow table. In case of the wide table, individual signals may be further distinguished via fields denoting a specific scope in the table.

Meta data in or from the industrial plant can be defined within the graph or can be retrieved from external sources via keys which can be defined within the graph.

A requesting entity may require access to subsets of data within separate scopes within the graph. An example might be a unit responsible for monitoring critical assets like compressors or pumps that are located within different plants (scopes). To grant access in these kinds of scenarios, additional groupings or activities. (e.g. projects for short lived, topics for long lived activities) can be provided. The entities can be reference related entities within the graph and provide a grouping outside the other hierarchies. From there we have two options to authorize users or requesting entities. The scopes which are required are identified and access requests are send to all owners of the data. Alternatively, the owners of the data are requested to allow access to the logical entity (topic, project, etc) and thus all entities assigned to these activities inherit all required access rights to perform said activity. Activities can be a form of fine-grained authorization provider, and not a dedicated scope in the graph.

According to an embodiment, a method for controlling access to data in at least one industrial plant or in a database associated to the at least one industrial plant is provided. Elements of the industrial plant are mapped to elements of a graph structure based on a graph theory representing the industrial plant. The graph structure has several levels. Scopes associated to elements in the levels of the graph structure are defined or are pre-defined. At least one first authorization provider is associated to one of the scopes and is configured to provide an authorization to data from scopes in the same level or in lower levels than a level where the authorization provider is associated. A request for data from an entity is received via an application programming interface. The scope to which the requested data is related to is determined. Authorization is provided to the request from the requesting entity by the at least one first authorization provider associated to the scope to which the request is related to. The requesting entity is granted access to the requested data based on the authorized request. Hence, the first authorization provider can grant access to scopes in the same or lower levels in the graph structure. Optionally it cannot provide access to scopes in higher levels. Once a scope is determined the responsible authorization provider must be determined. It is the authorization provider in the same or in a higher level in the graph structure. The authorization provider can grant access to a scope and all other scopes in lower levels. The access to scopes in the lower levels can thus be inherited by the request from the entity. In other words, the first scope can be a parent scope and the request from the entity can inherit the access to the scopes in the lower levels.

With the above access control method it is possible to control an access to data in an industrial plant or data in a database associated to the industrial plant.

According to an embodiment, a second authorization provider is associated to a scope in a level lower than the level of the first authorization provider. The second authorization provider is configured to break the authorization of the first authorization provider for scopes in the same level or levels lower than the second authorization provider. The second authorization provider can break or stop the inheritance of the access rights from higher level scopes. Accordingly, highly sensitive scopes can be protected from access via higher level scopes.

According to an embodiment, a scope can be related to a target entity. The scope can define the data or the data source that is related to the target entity. The data can relate to data stored in a database, life data from an industrial plant or derived data (e.g. a computation or model that produces results based on some concrete or derived inputs).

According to an embodiment, a scope can be associated to at least one signal provider, which is providing at least one signal. A signal can relate to measurements or information generated by an entity in the graph structure. This can be measurements e.g. by sensors, within a production process or accounting information. The signal provider can also be a system or process generating a signal. This can be a database or a deployed model or calculation. Each signal must have a unique identifier such that it can be identified and thus be extracted within a data source. A signal can thus be a distinguishable piece of information or data within a data source.

According to an embodiment, data or information in or from the industrial plant can be structured into signals. Each signal can denote a column within a wide table, or a filter on a narrow table. In case of the wide table, individual signals may be further distinguished via fields denoting a specific scope in the table.

According to an embodiment, meta data in or from the industrial plant can be defined within the graph or can be retrieved from external sources via keys which can be defined within the graph.

According to an embodiment, a method for controlling access to data in an industrial plant or in a data base associated to the industrial plant is provided. Elements of the industrial plant are mapped to elements of a graph structure based on a graph theory. Scopes associated to elements of the graph structure are defined. At least one authorization provider is associated to at least one of the scopes. A request for data from a requesting entity is received via an application programming interface. It is determined to which scope the requested data is related to. An authorization to the request from the requesting entity is provided by the at least one authorization provider associated to the scope to which the request is related to. The requesting entity is granted access to the requested data based on the authorized request.

According to an embodiment a system for controlling access to data in at least one industrial plant or in a database associated to the at least one industrial plant is provided. Elements of the industrial plant are mapped to elements of a graph structure based on a graph theory representing the industrial plant. Each scope is associated to one of the elements in the graph structure, wherein each scope comprises at least one signal provider configured to provide a signal. The system comprises an application programming interface configured to receive a request from a requesting entity for data from at least one target entity in the at least one industrial plant, and at least one authorization provider associated to one of the scopes and being configured to provide an authorization of data from the scope (S10 - S30) to which the target entity is associated to.

The data of the industrial plant can be generated by signal providers (e.g. sensor data, lab measurements) or by a production asset. Each target entity within the graph can be identified differently in different data storages in the industrial plant or the database as its data may be used for different purposes (e.g. control a motor, determine an energy consumption, predictive maintenance etc). Hence, each target entity in the graph structure may have references to various unique identifiers pointing to data stored in backend systems. These identifiers can be parsed when the graph structure is generated. Hence, the identifiers can be determined beforehand. In addition or alternatively, the identifiers can also change during the operation of the industrial plant.

According to an embodiment, an identifiable target entity in the graph structure may be a plant, a cost center, a business unit, a process group, a unit operation, a signals provider etc.

According to an embodiment, a scope can be related to a target entity. The scope can define the data or the data source that is related to the target entity. The data can relate to data stored in a database, life data from an industrial plant or derived data (e.g. a computation or model that produces results based on some concrete or derived inputs).

According to an embodiment, a scope can be associated to at least one signal provider, which is providing at least one signal. A signal can relate to measurements or information generated by an entity in the graph structure. This can be measurements e.g. by sensors, within a production process or accounting information. The signal provider can also be a system or process generating a signal. This can be a database or a deployed model or calculation. Each signal must have a unique identifier such that it can be identified and thus be extracted within a data source. A signal can thus be a distinguishable piece of information or data within a data source.

The chemical plant can refer to any manufacturing facility based on chemical processes, e.g. transforming a feedstockto a product using chemical processes. In contrast to discrete manufacturing, chemical manufacturing is based on continuous or batch processes. As such monitoring and/or controlling of chemical plants is time dependent and hence based on large time series data sets. A chemical plant may include more than 1.000 sensors producing measurement data points every couple of seconds. Such dimensions result in multiple terabytes of data to be handled in a system for controlling and/or monitoring chemical plants. A small-scale chemical plant may include a couple of thousand sensors producing data points every 1 to 10s. For comparison a large-scale chemical plant may include a couple of ten-thousand sensors, e.g. 10.000 to 30.000, producing data points every 1 to 10s. Contextualizing such data results in the handling of multiple hundred gigabytes to multiple terabytes.

Chemical plants may produce a product via one or more chemical processes transforming the feedstock via one or more intermediate products to the product. Preferably a chemical plant provides an encapsulated facility producing a product, that may be used as feedstock for the next steps in the value chain. Chemical plants may be large-scale plants like oil and gas facilities, gas cleaning plants, carbon dioxide capture facilities, liquefied natural gas (LNG) plants, oil refineries, petro-chemical facilities or chemical facilities. Upstream chemical plants in petrochemicals process production for example include a steamcracker starting with naphtha being processed to ethylene and propylene. These upstream products may then be provided to further chemical plants to derive downstream products such as polyethylene or polypropylene, which may again serve as feedstock for chemical plants deriving further downstream products. Chemical plants may be used to manufacture discrete products. In one example one chemical plant may be used to manufacture precursors for polyurethane foam. Such precursors may be provided to a second chemical plant for the manufacture of discrete products, such as an isolation plate comprising polyurethane foam.

The value chain production via various intermediate products to an end product can be decentralized in various locations or integrated in a Verbund site or a chemical park. Such Verbund sites or chemical parks comprise a network of interconnected chemical plants, where products manufactured in one plant can serve as a feedstock for another plant.

Chemical plants may include multiple assets, such as heat exchangers, reactors, pumps, pipes, distillation or absorption columns to name a few of them. In chemical plants some assets may be critical. Critical assets are those, which when disrupted critically impact plant operation. This can lead to manufacturing processes being compromised. Reduced product quality or even manufacturing stops may the result. In the worst-case scenario fire, explosion or toxic gas release may be the result of such disruption. Hence such critical assets may require more rigorous monitoring and/or controlling then other assets depending on the chemical processes and the chemicals involved. To monitor and/or control chemical processes and assets multiple actors and sensors may be embedded in the chemical plant. Such actors or sensors may provide process or asset specific data relating to e.g. the state of an individual asset, the state of an individual actor, the composition of a chemical, or the state of a chemical process. In particular, process or asset specific data may include one or more of the following data categories: process operation data, such as composition of a feedstock or an intermediate product, process monitoring data, such as flow, material temperature, asset operation data, such as current, voltage, and asset monitoring data, such as asset temperature, asset pressure, vibrations.

Assets may include any component of the chemical plant, such as equipment, instrumentation, machine, process or process component.

Process or asset specific data refers to data relating to a specific asset or process and contextualized with respect to such specific asset or process. Process or asset specific data may be contextualized only with respect to individual assets and processes. Process or asset specific data may include measurement value, data quality measure, time, measurement unit, asset identifier for specific assets or process identifier for a specific process sections or stages. Such process or asset specific data may be collected on the lowest processing layer and contextualized with respect to specific assets or processes in a single plant. Such contextualization may relate to context available on the lowest processing layer. Such context may relate to a single plant.

Plant specific data refers to process or asset specific data that is contextualized with respect to one or more plant(s). Such plant specific data may be collected on a further higher processing layer and contextualized with respect to multiple plants. Specifically, contextualization may relate to context available on the higher processing layer. Via contextualization context such as plant identifier, plant type, reliability indicator, or alarm limits for the plant may be added to process or asset specific data points. In a further step technical asset structure of one or more plant(s), a Verbund site or a chemical park, other asset management structure (e.g. asset network), or application context (e.g. model identifier, third party exchange) may be added. Such overarching context can originate from functional locations or digital twins, such as digital piping and instrumentation diagrams, 3D models or scans with xyz coordinates of the plant assets. Additionally or alternatively local scans from mobile devices linked to e.g. piping and instrumentation diagrams may be used for contextualization.

In particular, plant specific data relating to interfaces between chemical plants in a manufacturing chain may be provided on the higher processing layer or the external processing layer. Thus, monitoring and/or controlling, e.g. via anomaly detection, setpoint steering and optimization in chains across multiple plants, can be enhanced. For monitoring and/or controlling the chain across multiple plants process applications with online in/out data profiles may be used. Such data and process applications may be transferred between plants. Combined with mass and energy balances that can be monitored, such process applications may optimize the full chain across chemical plants rather than individual plants in the chain.

The input data may include real time data from sensors, such as wireless monitoring devices or loT devices, non-real time data, or output data of deployed containers or executed applications. Such data may relate to machinery, such as machinery type or sensor data measured with respect to the machinery, chemicals, such as chemicals type or sensor data measured with respect to chemical components processed in the chemical plant, processes, such as chemical process type or sensor data measured with respect to the chemical processes performed in the chemical plant, and/or plant, such as plant type or sensor data measured with respect to the chemical plant, e.g. environmental measurement data.

A single unit device or system may fulfil the functions of several items recited in the claims. The mere fact that certain measures are recited in mutually different dependent claims does not indicate that a combination of these measures cannot be used to advantage. Procedures like the analysis of data and the adding of metadata to the data etc. performed by one or several units or devices can be performed by any other number of units, devices or systems. These procedures can be implemented as a program code means of a computer program and/or as dedicated hardware. A computer program product may be stored/distributed on a suitable medium such as an optical storage medium or a solid state medium supplied together with or as part of other hardware but may also be distributed in other form such as via the internet or other wired or wireless telecommunication systems.

Any reference signs in the claims should not be constructed as limiting the scope.

## Claims

1. Method for controlling access to data in at least one industrial plant or in a database associated to the at least one industrial plant, wherein elements (11 - 18) of the industrial plant are mapped to elements of a graph structure based on a graph theory representing the industrial plant, wherein the graph structure has several levels, wherein scopes (S10 - S30) are defined, which are associated to elements (11 - 18) in the levels of the graph structure and/or which are associated to target entities in the graph structure or target entities associated to elements in the graph structure, wherein at least one authorization provider (31 - 33) is associated to one of the scopes (S10 - S30) and is configured to provide an authorization of data from scopes (S10 - S30), wherein identifiers for target entities in or associated to the elements in the graph structure are parsed, wherein each scope comprises at least one signal provider configured to provide a signal, wherein each scope being associated to one of the elements or target entities in the graph structure, comprising the steps of:
receiving a request from a requesting entity for data of at least one target entity in the or associated to the at least one industrial plant via an application programming interface (API),
determining to which scope (S10 - S30) the target entity is related to,
providing authorization to the request for data from the target entity by the at least one authorization provider (31 - 33) associated to the scope (S10 - S20) to which the target entity is related to, and
granting the requesting entity access to the requested data of the target entity based on the authorized request.

2. Method according to claim 1, wherein
at least one role defining access rights to the data in the industrial plant or the data base is associated to requesting entity,
wherein the authorization for the requested data is performed based on the role associated to the requesting entity.

3. Method according to claim 1, or 2, wherein
the requesting entity is a user, a service, a micro-service and/or a data processing pipeline.

4. Method of any one of the claims 1 to 3, wherein
the data of the target entity comprises data relating to a production asset in the industrial plant, processing data, telemetry data, meta data, laboratory data, production data.

5. Method of any one of the claims 1 to 4, wherein
the target entity is a user, an internal or external service, an internal or external micro-service, a data processing pipeline.

6. Method of any one of the claims 1 to 5, wherein
a target entity in the graph structure may be a plant, a cost center, a business unit, a process group, a unit operation or a signals provider.

7. System for controlling access to data in at least one industrial plant or in a database associated to the at least one industrial plant, wherein elements (11 - 18) of the industrial plant are mapped to elements of a graph structure based on a graph theory representing the industrial plant, wherein the graph structure has several levels, wherein scopes (S10 - S30) are defined, which are associated to elements (11 - 18) in the levels of the graph structure and/or which are associated to entities in the graph structure or associated to elements in the graph structure, wherein identifiers for entities in or associated to the elements in the graph structure are parsed, wherein each scope comprises at least one signal provider configured to provide a signal, wherein each scope being associated to one of the elements or entities in the graph structure, comprising:
at least one authorization provider (31 - 33) being associated to one of the scopes (S10 - S30) and being configured to provide an authorization for data from scopes (S10 - S30),
an application programming interface (API) configured to receive a request from a requesting entity for data of at least one target entity in the or associated to an entity in the at least one industrial plant via,
wherein the scope (S10 - S30) to which the target entity is related to is determined,
wherein the at least one authorization provider (31 - 33) is configured to provide authorization to the request for data from the target entity.

8. Computer program controlling access to data in an industrial plant or in a data base associated to the industrial plant, the program comprising code means for causing the system according to claim 7 to execute a method according to any one of the claims 1 to 6, when the program is run on a computer controlling the system.
